# EUROPÄISCHE PATENTSCHRIFT

(11) **EP 3 972 064 B1**
(45) Veröffentlichungstag und Bekanntmachung des Hinweises auf die Patenterteilung: **03.12.2025**
(21) Anmeldenummer: 20196585.2
(22) Anmeldetag: 17.09.2020
(51) Int. Cl.: H01T 2/02, H01T 15/00, H01T 4/20, H02H 9/06, H01T 4/16, H02H 7/16

(54) **FUNKENSTRECKENANORDNUNG MIT ZÜNDVORRICHTUNG ZUM SCHUTZ EINER HOCHSPANNUNGSEINRICHTUNG SOWIE ZÜNDVORRICHTUNG DAFÜR**
SPARK GAP ASSEMBLY WITH IGNITION DEVICE FOR PROTECTING A HIGH VOLTAGE DEVICE AND IGNITION DEVICE FOR SAME
DISPOSITIF D'ÉCLATEUR POURVU DE DISPOSITIF D'AMORÇAGE PERMETTANT DE PROTÉGER UN AGENCEMENT HAUTE TENSION AINSI QUE DISPOSITIF D'AMORÇAGE ASSOCIÉ

(43) Veröffentlichungstag der Anmeldung: 23.03.2022
(73) Patentinhaber: Siemens Energy Global GmbH & Co. KG, 81739 München (DE)
(72) Erfinder: Lange, Dennie, 91058 Erlangen (DE); Söder, Michael, 91336 Heroldsbach (DE)

(56) Entgegenhaltungen:
- EP-A1- 2 747 232
- WO-A1-2015/113793
- US-A- 4 860 156
- US-A1- 2014 320 036

## Beschreibung

Die Erfindung betrifft eine Zündvorrichtung für eine Funkenstreckenanordnung umfassend wenigstens einen ersten und einen zweiten Zündkondensator zur Spannungsteilung einer Spannung zwischen einer ersten und einer zweiten Elektrode der Funkenstreckenanordnung, eine erste Auslösefunkenstrecke, die in einem ersten Parallelzweig zum ersten Zündkondensator angeordnet ist, und eine zweite Auslösefunkenstrecke, die in einem zweiten Parallelzweig zum zweiten Zündkondensator angeordnet ist. Zur besagten Spannungsteilung sind ein erster Pol des ersten Zündkondensators mit einer ersten Elektrode der Funkenstreckenanordnung, ein zweiter Pol des ersten Zündkondensators mit einem ersten Pol des zweiten Zündkondensators und ein zweiter Pol des zweiten Zündkondensators mit einer zweiten Elektrode der Funkenstreckenanordnung verbindbar bzw. im Betrieb verbunden.

In Anordnungen mit Hochspannungseinrichtungen, wie beispielsweise Serienkompensationsanlagen (FSC), werden Funkenstrecken üblicherweise zum Schutz der Hochspannungseinrichtungen, insbesondere der Kondensator- und Ableiterbänke eingesetzt. Bei höheren Spannungsebenen (insbesondere bei möglichen Spitzenspannungen oberhalb von 100 kV oder gar 15 kV) ist in Funkenstrecken, die wie oben beschriebenen aufgebaut sind, eine kaskadierte Zündung von mehreren Auslösefunkenstrecken notwendig. Um mehrere in Reihe geschaltete Auslösefunkenstrecken zu zünden, werden üblicherweise Zündübertrager (Zündspulen) eingesetzt. Die Zündübertrager sind unter Hochspannungsbedingungen ein vergleichsweise empfindliches Bauteil. Ein defekter Zündübertrager kann zu Zündversagern oder zu einem unerwünscht hohem Zündverzug in der Funkenstrecke führen.

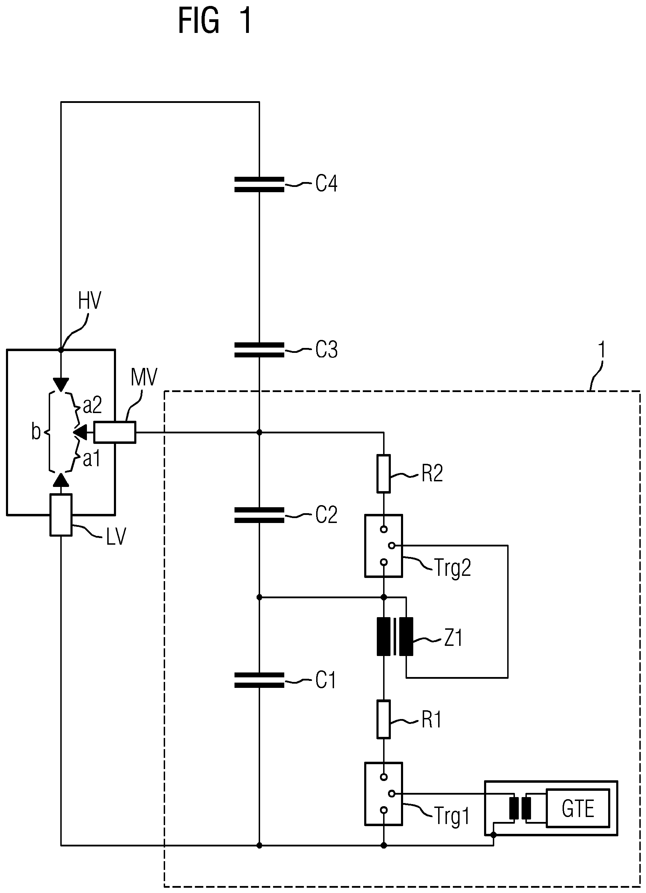

Ein Beispiel einer Zündvorrichtung nach dem Stand der Technik ist in Figur 1 dargestellt. Die Zündvorrichtung 1 dient zum Zünden einer Funkenstrecke mit einer ersten Elektrode (Niederspannungselektrode LV), einer zweiten Elektrode (Mittelspannungselektrode bzw. Zündelektrode MV) und einer dritten Elektrode (Hochspannungselektrode HV). Die Funkenstreckenanordnung ist parallel zu der zu schützenden Hochspannungseinrichtung geschaltet, so dass im Betrieb der gesamten Anordnung zumindest zeitweise die erste Elektrode auf einem Niederspannungspotenzial und die dritte Elektrode auf einem Hochspannungspotenzial liegen. Eine Spannungsteilung der gesamten Spannungsdifferenz zwischen dem Niederspannungspotenzial und dem Hochspannungspotenzial erfolgt mittels vier Zündkondensatoren C1-C4.

Zum aktiven Zünden der Funkenstrecke b ist der Zündkreis bzw. die Zündvorrichtung 1 mit der Zündelektrode (MV) vorgesehen, wobei der Zündkreis einen kapazitiven Spannungsteiler mit zwei Zündkondensatoren C1 und C2 aufweist. Die Zündkondensatoren C1 und C2 sind jeweils durch einen Parallelzweig überbrückbar, in dem eine Auslösefunkenstrecke Trg1 bzw. Trg2 und in Reihenschaltung zu dieser ein ohmscher Widerstand R1 bzw. R2 angeordnet sind. Im unteren Teil des Zündkreises ist zusätzlich ein Zündübertrager in Form einer Zündspule Z1 verbaut, welcher mit der zweiten Auslösefunkenstrecke Trg2 verbunden ist. Die untere Auslösefunkenstrecke Trg1 wird durch einen Hochspannungspuls, welcher von einer durch eine Schutzeinrichtung angesteuerten Zündelektronik GTE (Gap-Trigger-Electronics) erzeugt wird, in einen leitenden Zustand gebracht. Der leitende Zustand von Trg1 verursacht einen Stromfluss über einen ersten Parallelzweig (Trg1, R1 und Z1) und somit eine Überbrückung des Zündkondensators C1. Durch den Stromfluss in Z1 wird ein Hochspannungspuls erzeugt, der die zweite Auslösefunkenstrecke Trg2 in einen leitenden Zustand überführt. Durch den Stromfluss über einen zweiten Parallelzweig (Trg2, R2) wird auch der Zündkondensator C2 überbrückt. Durch die Überbrückung von C1 und C2 wird die Zündelektrode MV auf das Potential der ersten Elektrode (untere Hauptelektrode) LV gelegt, wodurch eine Funkenentladung zur dritten Elektrode (obere Hauptelektrode) HV über eine Funkenstrecke a2 überspringt. Durch den Lichtbogen werden die oberen Kondensatoren C3 und C4 überbrückt, wodurch die Zündkondensatoren C1 und C2 wieder geladen werden bis eine Funkenentladung zwischen der Zündelektrode MV und der unteren Hauptelektrode LV über die Funkenstrecke a1 entsteht. Die Funkenstrecke b ist somit gezündet.

Eine Zündvorrichtung solcher Art ist beispielsweise aus der EP 2 747 232 A1 bekannt.

Eine weitere Zündvorrichtung mit einer Reihenschaltung mehrerer Auslösefunkenstrecken ist in der US 4 860 156 A offenbart.

Eine Kopplung zweier Zünd-Teilstrecken ist aus der US 2014/0320036 Al bekannt.

Die Aufgabe der Erfindung ist es, eine artgemäße Zündvorrichtung anzugeben, die möglichst kostengünstig und zuverlässig ist.

Die Aufgabe wird bei einer artgemäßen Zündvorrichtung erfindungsgemäß dadurch gelöst, dass ein erster Zündwiderstand (Zündwiderstandselement) in dem ersten Parallelzweig vorgesehen ist, wobei ein erster Potenzialpunkt zwischen dem ersten Zündwiderstand und der ersten Auslösefunkenstrecke mit einer Zündelektrode der zweiten Auslösefunkenstrecke verbunden ist. Anstatt eines Zündübertragers bzw. einer Zündspule wird der ohmsche Zündwiderstand eingesetzt. Wird die erste Auslösefunkenstrecke in einen leitenden Zustand überführt, fällt über dem ersten Zündwiderstand und damit über der zweiten Auslösefunkenstrecke eine Spannung ab, die zum Zünden der zweiten Auslösefunkenstrecke führt und diese somit in einen leitenden Zustand überführt. Demnach erfolgt die Auslösung der zweiten Auslösefunkenstrecke zündspulenfrei mittels der am ersten Zündwiderstand anstehenden Spannung (Zündspannung). Ein Hochspannungspuls (i.e. eine starke Spannungsänderung), wie in Anordnung nach Figur 1, wird zur Zündung der zweiten Auslösefunkenstrecke demnach nicht benötigt. Eine Verbindung zwischen einem zweiten Potenzialpunkt, der zwischen dem ersten und dem zweiten Zündkondensator liegt, und der Zündelektrode führt demnach über den ersten Zündwiderstand.

Die Zündung der zweiten Auslösefunkenstrecke ausschließlich über einen ohmschen Widerstand (Zündwiderstand) bietet den Vorteil, dass kein Zündübertrager (Zündspule) verwendet werden muss. Ein Zündübertrager ist ein technisch aufwendigeres und kostenintensiveres Bauteil als ein ohmscher Widerstand. Der technische Aufbau wird durch die Erfindung wesentlich vereinfacht, wodurch sich ein Kostenvorteil ergibt, und ist damit weniger Anfällig gegenüber Verschleiß und somit besonders zuverlässig.

Geeigneterweise ist die erste Auslösefunkenstrecke mittels einer Zündelektronik (GTE) zündbar. Die Zündelektronik kann beispielsweise einen steuerbaren Halbleiterschalter **(z.B.** IGBT) sowie einen Transformator (möglichst mit einer steilen Anstiegsflanke) umfassen. Die Ansteuerung der Zündelektronik kann mittels einer Ansteuereinrichtung erfolgen, die auf vorbestimmte Fehlersignale reagiert.

Zweckmäßigerweise kann die Zündvorrichtung ferner einen zweiten Zündwiderstand umfassen, der in dem ersten Parallelzweig zwischen dem ersten Potenzialpunkt und der ersten Auslösefunkenstrecke angeordnet ist. Mit anderen Worten ist hierbei der Gesamt-Zündwiderstand auf den ersten und den zweiten Zündwiderstand aufgeteilt.

Damit nach dem Zünden der Entladestrom nicht über die zweite Auslösefunkenstrecke fließt, kann zusätzlich ein weiterer Widerstand eingesetzt werden. Gemäß einer Ausführungsform der Erfindung umfasst die Zündvorrichtung dementsprechend einen dritten Zündwiderstand, der in der Verbindung des ersten Potenzialpunktes mit der Zündelektrode der zweiten Auslösefunkenstrecke angeordnet ist.

Die Erfindung betrifft ferner eine Funkenstreckenanordnung mit einer ersten Elektrode, einer zweiten Elektrode und einer dritten Elektrode, wobei eine erste Funkenstrecke zwischen der ersten und der zweiten Elektrode und eine zweite Funkenstrecke zwischen der zweiten und der dritten Elektrode jeweils kleiner (im Sinne eines kleineren Elektrodenabstades) als eine dritte Funkenstrecke zwischen der erster und der dritten Elektrode. Die zweite Elektrode wird auch als Zündelektrode bezeichnet.

Die Aufgabe der Erfindung ist es, eine solche Funkenstreckenanordnung vorzuschlagen, die möglichst kostengünstig und zuverlässig gezündet werden kann.

Die Aufgabe wird erfindungsgemäß durch eine erfindungsgemäße Zündvorrichtung gelöst.

Die Vorteile der erfindungsgemäßen Funkenstreckenanordnung ergeben sich sinngemäß aus den bereits im Zusammenhang mit der erfindungsgemäßen Zündvorrichtung beschriebenen Vorteilen. Die erfindungsgemäße Funkenstrecke ist vorteilhafterweise in weniger als 1 ms zündbar.

Gemäß einer Ausführungsform der Erfindung umfasst die Funkenstreckenanordnung einen dritten Zündkondensator und einen vierten Zündkondensator, wobei ein erster Pol des dritten Zündkondensators mit der zweiten Elektrode verbunden ist, ein zweiter Pol des dritten Zündkondensators mit einem ersten Pol des vierten Zündkondensators verbunden ist, ein zweiter Pol des vierten Zündkondensators mit der dritten Elektrode verbunden ist.

Die Erfindung betrifft des Weiteren eine Anordnung mit einer Hochspannungseinrichtung.

Die Aufgabe der Erfindung besteht darin, eine solche Anordnung vorzuschlagen, die in einem Fehlerfall möglichst gut geschützt ist.

Die Aufgabe wird bei einer artgemäßen Anordnung erfindungsgemäß dadurch gelöst, dass zum Schutz der Hochspannungseinrichtung eine erfindungsgemäße Funkenstreckenanordnung vorgesehen ist.

Die Hochspannungseinrichtung kann beispielsweise eine Hochspannungskondensator-Anordnung (FSC) umfassen, insbesondere eine Serienkapazität zur Netzstabilisierung (Fixed Series Capacitor, FSC), wobei die Funkenstreckenanordnung in einer Parallelschaltung zur Hochspannungskondensator-Anordnung angeordnet ist.

Die Anordnung kann ferner einen Überspannungsableiter (z.B. in Form einer Ableiterbank) umfassen, der in einer Parallelschaltung zur Hochspannungskondensator-Anordnung angeordnet ist. Der Überspannungsableiter kann in einem Fehlerfall die Spannung über der Hochspannungseinrichtung zu deren Schutz begrenzen, wobei durch diesen ein Teil der Energie aufgenommen wird. Vorzugsweise wird zeitgleich mit dem Zündbefehl zur Funkenstrecke ein Schließkommando an einen ebenfalls parallel zu Hochspannungseinrichtung angeordneten Bypasschalter gegeben. Die Zeitspanne bis zum Einschalten des Bypassschalters beträgt üblicherweise (wenigstens) ein Vielfaches der Zeitspanne bis zum Zünden der Funkenstrecke.

Die Erfindung betrifft ferner ein Verfahren zum Zünden einer Funkenstreckenanordnung.

Die Aufgabe der Erfindung besteht darin, ein solches Verfahren anzugeben, das möglichst zuverlässig ist.

Die Aufgabe wird bei einem artgemäßen Verfahren erfindungsgemäß dadurch gelöst, dass das Verfahren mittels einer erfindungsgemäßen Zündvorrichtung durchgeführt wird, wobei die Zündung der zweiten Auslösefunkenstrecke zündspulenfrei mittels einer am ersten Zündwiderstand anstehenden Spannung erfolgt.

Die Vorteile des erfindungsgemäßen Verfahrens entsprechen insbesondere denjenigen Vorteilen, die zuvor im Zusammenhang mit der erfindungsgemäßen Zündvorrichtung und der erfindungsgemäßen Funkenstreckenanordnung beschrieben wurden.

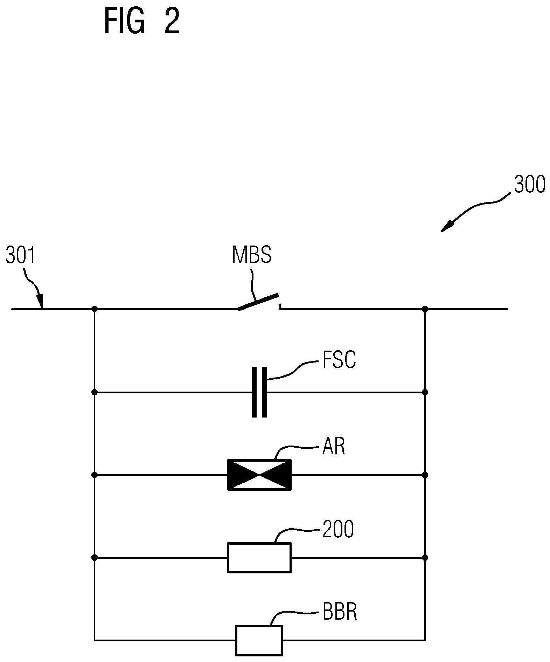

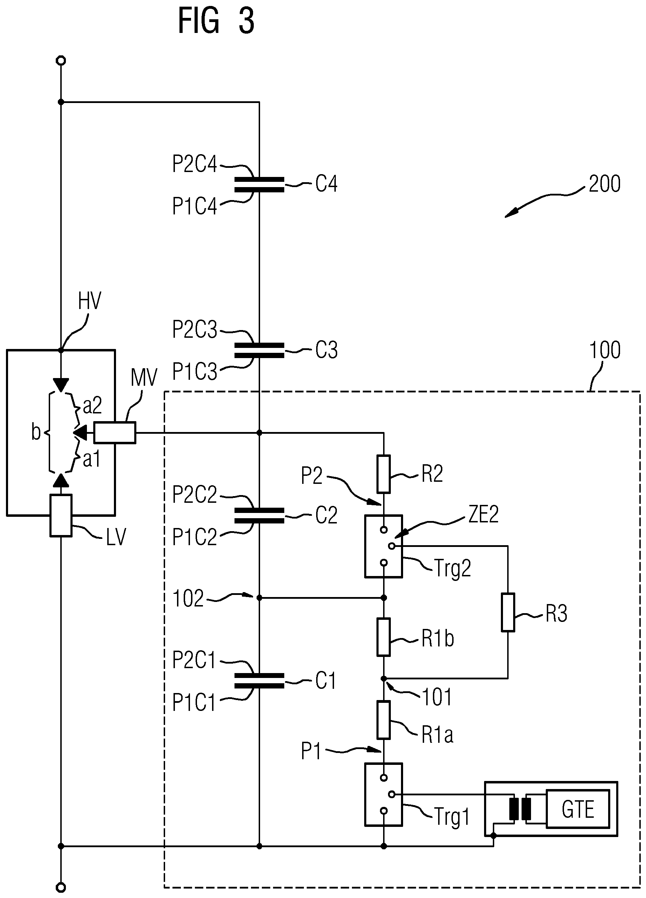

Die Erfindung wird nachfolgend anhand der Figuren 2 und 3 weiter erläutert.

Figur 2 zeigt ein Ausführungsbeispiel einer erfindungsgemäßen Anordnung in einer schematischen Darstellung;

Figur 3 zeigt ein Ausführungsbeispiel einer erfindungsgemäßen Funkenstreckenanordnung mit einer erfindungsgemäßen Zündvorrichtung in einer schematischen Darstellung.

In Figur 2 ist eine Anordnung 300 mit einem seriell in ein Gleichspannungsnetz 301 eingefügten Serienkondensator FSC dargestellt. In einer Parallelschaltung zum Serienkondensator FSC sind ein Überspannungsableiter AR, ein Bypassschalter BBR sowie eine Funkenstreckenanordnung 200 angeordnet, auf deren Aufbau in der nachfolgenden Figur 3 näher eingegangen wird. Zudem ist ein Trennschalter MBS (Main Bypass Switch) vorgesehen.

In Figur 3 ist eine Funkenstreckenanordnung 200 dargestellt. Die gesamte an der mittels der Funkenstreckenanordnung 200 zu schützenden Hochspannungseinrichtung (bspw. einem Hochspannungskondensator, vgl. Figur 2) anstehende Spannung ist mittels vier Zündkondensatoren C1-C4 aufgeteilt. Dazu sind ein erster Pol (P1C1) des ersten Zündkondensators (C1) mit der ersten Elektrode (LV), ein zweiter Pol (P2C1) des ersten Zündkondensators (C1) mit einem ersten Pol (P1C2) des zweiten Zündkondensators (C2), ein zweiter Pol (P2C2) des zweiten Zündkondensators (C2) sowie ein erster Pol (P1C3) des dritten Zündkondensators (C3) jeweils mit der zweiten Elektrode (MV), ein zweiter Pol (P2C3) des dritten Zündkondensators (C3) mit einem ersten Pol (P1C4) des vierten Zündkondensators (C4) und ein zweiter Pol (P2C4) des vierten Zündkondensators (C4) mit der dritten Elektrode (HV) verbunden. Die Funkenstreckenanordnung 200 umfasst eine erste Elektrode (Niederspannungselektrode LV), eine zweite Elektrode (Mittelspannungselektrode bzw. Zündelektrode MV) und eine dritte Elektrode (Hochspannungselektrode HV). Eine (Haupt-, bzw. dritte) Funkenstrecke b ist jeweils größer eingestellt (Abstand zwischen den Elektroden) als eine erste und zweite Funkenstrecke a1 bzw. a2.

Zum aktiven Zünden der Funkenstrecke b zwischen der ersten und der dritten Elektrode LV, HV ist eine Zündvorrichtung 100 vorgesehen. Die Zündvorrichtung 100 umfasst einen kapazitiven Spannungsteiler mit dem ersten und dem zweiten Zündkondensator C1 und C2. Der erste Zündkondensator C1 ist mittels eines ersten Parallelzweiges P1, der zweite Zündkondensator C2 ist mittels eines zweiten Parallelzweiges P2 überbrückbar. In dem ersten Parallelzweig P1 sind eine erste Auslösefunkenstrecke Trg1, ein erster Zündwiderstand R1a und ein zweiter Zündwiderstand R1b angeordnet. In dem zweiten Parallelzweig P2 ist eine zweite Auslösefunkenstrecke Trg2 sowie ein weiteres ohmsches Widerstandselement R2 angeordnet.

Die Zündvorrichtung 100 umfasst ferner eine Verbindung zwischen einem erster Potenzialpunkt 101 zwischen dem ersten Zündwiderstand R1b und der ersten Auslösefunkenstrecke Trg1 mit einer Zündelektrode ZE2 der zweiten Auslösefunkenstrecke Trg2.

Ein zweiter Potenzialpunkt 102 zwischen dem ersten und dem zweiten Zündkondensator C1 und C2 ist demnach über den ersten Zündwiderstand R1b mit dem ersten Potenzialpunkt 101 verbunden. Eine Verbindung zwischen dem zweiten Potenzialpunkt 102 und der Zündelektrode ZE2 führt daher stets über den ersten Zündwiderstand R1b.

Die Funktionsweise der Funkenstreckenanordnung 200 bzw. der Zündvorrichtung 100 kann wie folgt beschrieben werden. Die erste Auslösefunkenstrecke Trg1 wird durch einen Hochspannungspuls gezündet bzw. in einen leitenden Zustand gebracht, der mittels einer durch eine Schutzeinrichtung angesteuerten Zündelektronik GTE (Gap-Trigger-Electronics) erzeugt wird. Der leitende Zustand von Trg1 bewirkt einen Stromfluss über einen ersten Parallelzweig (Trg1, R1a und R1b) und somit eine Überbrückung des Zündkondensators C1. Wird die Auslösefunkenstrecke Trg1 in einen leitenden Zustand überführt, fällt über dem ersten Zündwiderstand R1b und damit über der Auslösefunkenstrecke Trg2 (bzw. zwischen dem Potenzialpunkt 101 und der Zündelektrode ZE2) eine Spannung ab, die zum Zünden der zweiten Auslösefunkenstrecke Trg2 führt und diese somit in einen leitenden Zustand überführt. Damit nach dem Zünden der Entladestrom nicht über die Auslösefunkenstrecke Trg2 fließt, ist zusätzlich ein Widerstand R3 vorgesehen. Durch den Stromfluss über den zweiten Parallelzweig P2 wird auch der zweite Zündkondensator C2 überbrückt. Aufgrund der Überbrückung der beiden Zündkondensatoren C1 und C2 wird die Zündelektrode MV auf das Potential der ersten Elektrode LV gelegt. Nun fällt die gesamte Spannung der zu schützenden Komponente (Hochspannungseinrichtung) an C3 und C4 ab. Dadurch wird eine Funkenentladung zur dritten Elektrode HV über die Funkenstrecke a2 bewirkt. Durch einen auf diese Weise erzeugten bzw. entstandenen Lichtbogen werden die oberen Kondensatoren C3 und C4 überbrückt, wodurch die Zündkondensatoren C1 und C2 wieder geladen werden, und zwar bis eine Funkenentladung zwischen der Zündelektrode MV und der ersten Hauptelektrode LV über die Funkenstrecke a1 entsteht. Die gesamte Funkenstrecke b ist damit mit einer Verzögerungszeit von weniger als 1 ms gezündet. Damit kann die Funkenstreckenanordnung 200 die Hochspannungseinrichtung im Fall eines Fehlers vor Überbelastungen schützen. Mittels eines Bypass-Leistungsschalters wird der Lichtbogen wieder gelöscht.

## Patentansprüche

1. Zündvorrichtung (100) mit einer Funkenstreckenanordnung (200) umfassend
- wenigstens einen ersten und einen zweiten Zündkondensator (C1, C2) zur Spannungsteilung einer Spannung zwischen einer ersten und einer zweiten Elektrode (LV, MV) der Funkenstreckenanordnung (200) ein erster Pol des ersten Zündkondensators (C1) mit der ersten Elektrode (LV), ein zweiter Pol des ersten Zündkondensators (C1) mit einem ersten Pol des zweiten Zündkondensators (C2) und ein zweiter Pol des zweiten Zündkondensators (C2) mit der zweiten Elektrode (MV) verbunden sind,
- eine erste Auslösefunkenstrecke (Trg1), die in einem ersten Parallelzweig (P1) zum ersten Zündkondensator (C1) angeordnet ist,
- eine zweite Auslösefunkenstrecke (Trg2) , die in einem zweiten Parallelzweig (P2) zum zweiten Zündkondensator (C2) angeordnet ist,
**gekennzeichnet durch**
einen ersten Zündwiderstand (R1b) in dem ersten Parallelzweig (P1), wobei ein erster Potenzialpunkt (101) zwischen dem ersten Zündwiderstand (R1b) und der ersten Auslösefunkenstrecke (Trg2) mit einer Zündelektrode (ZE2) der zweiten Auslösefunkenstrecke (Trg2) verbunden ist.

2. Zündvorrichtung (100) nach Anspruch 1,
wobei die erste Auslösefunkenstrecke mittels einer Zündelektronik (GTE) zündbar ist.

3. Zündvorrichtung (100) nach einem der vorangehenden Ansprüche,
wobei die Zündvorrichtung ferner einen zweiten Zündwiderstand (R1a) umfasst, der in dem ersten Parallelzweig (P1) zwischen dem ersten Potenzialpunkt (101) und der ersten Auslösefunkenstrecke (Trg1) angeordnet ist.

4. Zündvorrichtung (100) nach einem der vorangehenden Ansprüche,
wobei die Zündvorrichtung ferner einen dritten Zündwiderstand (R3) umfasst, der in der Verbindung des ersten Potenzialpunktes (101) mit der Zündelektrode (ZE2) der zweiten Auslösefunkenstrecke (Trg2) angeordnet ist.

5. Funkenstreckenanordnung (200) mit einer ersten Elektrode (LV), einer zweiten Elektrode (MV) und einer dritten Elektrode (HV),
wobei eine erste Funkenstrecke (a1) zwischen der ersten und der zweiten Elektrode (LV, MV) und eine zweite Funkenstrecke (a2) zwischen der zweiten und der dritten Elektrode (MV, HV) im Sinne eines kleineren Elektrodenabstades jeweils kleiner als eine dritte Funkenstrecke (b) zwischen der erster und der dritten Elektrode (LV, HV) sind,
**dadurch gekennzeichnet, dass**
die Funkenstreckenanordnung eine Zündvorrichtung nach einem der Ansprüche 1 bis 4 umfasst.

6. Funkenstreckenanordnung (200) nach Anspruch 5,
wobei die Funkenstreckenanordnung (200) einen dritten Zündkondensator (C3) und einen vierten Zündkondensator (C4) umfasst, wobei
- ein erster Pol (P1C3) des dritten Zündkondensators (C3) mit der zweiten Elektrode (MV) verbunden ist,
- ein zweiter Pol (P2C3) des dritten Zündkondensators (C3) mit einem ersten Pol (P1C4) des vierten Zündkondensators (C4) verbunden ist,
- ein zweiter Pol (P2C4) des vierten Zündkondensators (C4) mit der dritten Elektrode (HV) verbunden ist.

7. Anordnung (300) mit einer Hochspannungseinrichtung (FSC),
**dadurch gekennzeichnet, dass** zum Schutz der Hochspannungseinrichtung (FSC) eine Funkenstreckenanordnung (200) nach einem der Ansprüche 5 oder 6 vorgesehen ist.

8. Anordnung (300) nach Anspruch 7,
wobei die Hochspannungseinrichtung eine Hochspannungskondensator-Anordnung (FSC) umfasst, wobei die Funkenstreckenanordnung (200) in einer Parallelschaltung zur Hochspannungskondensator-Anordnung (FSC) angeordnet ist.

9. Anordnung (300) nach Anspruch 8,
wobei die Anordnung (300) ferner einen Überspannungsableiter (AR) umfasst, der in einer Parallelschaltung zur Hochspannungskondensator-Anordnung (FSC) angeordnet ist.

10. Verfahren zum Zünden einer Funkenstreckenanordnung (200), mittels einer Zündvorrichtung (100) nach einem der Ansprüche 1 bis 4,
bei dem die zweite Auslösefunkenstrecke (Trg2) zündspulenfrei mittels einer am ersten Zündwiderstand (R1b) anstehenden Spannung gezündet wird.

## Claims

1. An ignition device (100) with a spark gap arrangement (200), comprising
- at least one first and one second ignition condenser (C1, C2) for voltage division of a voltage between a first and a second electrode (LV, MV) of the spark gap arrangement (200) a first pole of the first ignition condenser (C1) is connected to the first electrode (LV), a second pole of the first ignition condenser (C1) to a first pole of the second ignition condenser (C2) and a second pole of the second ignition condenser (C2) to the second electrode (MV),
- a first tripping spark gap (Trg1) arranged in a first parallel branch (P1) to the first ignition condenser (C1),
- a second tripping spark gap (Trg2) arranged in a second parallel branch (P2) to the second ignition condenser (C2),
**characterised by** a first ignition resistor (R1b) in the first parallel branch (P1), wherein a first potential point (101) between the first ignition resistor (R1b) and the first tripping spark gap (Trg2) is connected to an ignition electrode (ZE2) of the second tripping spark gap (Trg2).

2. The ignition device (100) according to claim 1,
wherein the first tripping spark gap is ignitable by means of ignition electronics (GTE).

3. The ignition device (100) according to any of the preceding claims,
wherein the ignition device further comprises a second ignition resistor (Ria) arranged in the first parallel branch (P1) between the first potential point (101) and the first tripping spark gap (Trg1).

4. The ignition device (100) according to any of the preceding claims,
wherein the ignition device further comprises a third ignition resistor (R3) arranged in the connection of the first potential point (101) to the ignition electrode (ZE2) of the second tripping spark gap (Trg2).

5. A spark gap arrangement (200) with a first electrode (LV), a second electrode (MV) and a third electrode (HV),
wherein a first spark gap (a1) between the first and the second electrode (LV, MV) and a second spark gap (a2) between the second and the third electrode (MV, HV) are smaller, in the sense of a smaller electrode gap, than a third spark gap (b) between the first and the third electrode (LV, HV), respectively,
**characterised in that**
the spark gap arrangement comprises an ignition device according to any of claims 1 to 4.

6. The spark gap arrangement (200) according to claim 5,
wherein the spark gap arrangement (200) comprises a third ignition condenser (C3) and a fourth ignition condenser (C4), wherein
- a first pole (P1C3) of the third ignition condenser (C3) is connected to the second electrode (MV),
- a second pole (P2C3) of the third ignition condenser (C3) is connected to a first pole (P1C4) of the fourth ignition condenser (C4),
- a second pole (P2C4) of the fourth ignition condenser (C4) is connected to the third electrode (HV).

7. An arrangement (300) with a high voltage apparatus (FSC),
**characterised in that**, for protection of the high voltage apparatus (FSC), a spark gap arrangement (200) according to any of claims 5 or 6 is provided.

8. The arrangement (300) according to claim 7,
wherein the high voltage apparatus comprises a high voltage condenser arrangement (FSC), wherein the spark gap arrangement (200) is arranged in a parallel connection to the high voltage condenser arrangement (FSC).

9. The arrangement (300) according to claim 8,
wherein the arrangement (300) further comprises an overvoltage arrester (AR) arranged in a parallel connection to the high voltage condenser arrangement (FSC).

10. A method for igniting a spark gap arrangement (200) by means of an ignition device (100) according to any of claims 1 to 4, in which the second tripping spark gap (Trg2) is ignited without ignition coil by means of a voltage present at the first ignition resistor (R1b).

## Revendications

1. Dispositif d'allumage (100) avec un dispositif d'éclateur (200) comprenant
- au moins un premier et un deuxième condensateur d'allumage (C1, C2) pour diviser la tension entre une première et une seconde électrode (LV, MV) de l'éclateur (200), un premier pôle du premier condensateur d'allumage (C1) étant connecté à la première électrode (LV), un deuxième pôle du premier condensateur d'allumage (C1) étant connecté à un premier pôle du second condensateur d'allumage (C2), et un deuxième pôle du deuxième condensateur d'allumage (C2) étant connecté à la deuxième électrode (MV),
- un premier éclateur de déclenchement (Trg1) disposé dans une première branche parallèle (P1) au premier condensateur d'allumage (C1),
- un deuxième éclateur de déclenchement (Trg2) disposé dans une deuxième branche parallèle (P2) au deuxième condensateur d'allumage (C2),
**caractérisé par**
une première résistance d'allumage (R1b) dans la première branche parallèle (P1), dans laquelle un premier point de potentiel (101) entre la première résistance d'allumage (R1b) et le premier éclateur de déclenchement (Trg2) est connecté à une électrode d'allumage (ZE2) du deuxième éclateur de déclenchement (Trg2).

2. Dispositif d'allumage (100) selon la revendication 1,
dans lequel le premier éclateur de déclenchement peut être allumé au moyen d'une électronique d'allumage (GTE).

3. Dispositif d'allumage (100) selon l'une quelconque des revendications précédentes,
dans lequel le dispositif d'allumage comprend en outre une deuxième résistance d'allumage (R1a) disposée dans la première branche parallèle (P1) entre le premier point de potentiel (101) et le premier éclateur de déclenchement (Trg1).

4. Dispositif d'allumage (100) selon l'une quelconque des revendications précédentes,
dans lequel le dispositif d'allumage comprend en outre une troisième résistance d'allumage (R3) disposée dans la connexion du premier point de potentiel (101) à l'électrode d'allumage (ZE2) du deuxième éclateur de déclenchement (Trg2).

5. Dispositif d'éclateur (200) avec une première électrode (LV), une deuxième électrode (MV) et une troisième électrode (HV),
dans lequel un premier éclateur (a1) entre la première et la deuxième électrode (LV, MV) et un deuxième éclateur (a2) entre la deuxième et la troisième électrode (MV, HV) sont chacun plus petits qu'un troisième éclateur (b) entre la première et la troisième électrode (LV, HV) dans le sens d'une distance d'électrode plus petite,
**caractérisé en ce que**
le dispositif d'éclateur comprend un dispositif d'allumage selon l'une des revendications 1 à 4.

6. Dispositif d'éclateur (200) selon la revendication 5,
dans lequel le dispositif d'éclateur (200) comprend un troisième condensateur d'allumage (C3) et un quatrième condensateur d'allumage (C4), dans lequel
- un premier pôle (P1C3) du troisième condensateur d'allumage (C3) est connecté à la deuxième électrode (MV),
- un deuxième pôle (P2C3) du troisième condensateur d'allumage (C3) est relié à un premier pôle (P1C4) du quatrième condensateur d'allumage (C4),
- un deuxième pôle (P2C4) du quatrième condensateur d'allumage (C4) est connecté à la troisième électrode (HV).

7. Dispositif (300) avec un dispositif haute tension (FSC),
**caractérisé en ce qu'**un dispositif d'éclateur (200) selon l'une des revendications 5 ou 6 est prévu pour protéger le dispositif haute tension (FSC).

8. Dispositif (300) selon la revendication 7,
dans lequel le dispositif haute tension comprend un dispositif de condensateur haute tension (FSC), dans lequel le dispositif d'éclateur (200) est disposé dans un circuit parallèle au dispositif de condensateur haute tension (FSC).

9. Dispositif (300) selon la revendication 8,
dans lequel le dispositif (300) comprend en outre un parafoudre (AR) disposé en parallèle avec le dispositif de condensateur haute tension (FSC).

10. Procédé d'allumage d'un éclateur (200) au moyen d'un dispositif d'allumage (100) selon l'une quelconque des revendications 1 à 4,
dans lequel le deuxième éclateur de déclenchement (Trg2) est allumé sans bobine d'allumage au moyen d'une tension appliquée à la première résistance d'allumage (R1b).
